# EUROPEAN PATENT APPLICATION

(11) **EP 1 034 859 A1**
(43) Date of publication of application: **13.09.2000**
(21) Application number: 99830126.1
(22) Date of filing: 09.03.1999
(51) Int. Cl.: B21D 51/22, B23P 15/00, A47J 27/00, A47J 36/02, A47J 27/022

(54) **Process for the manufacture of cooking vessels and vessel obtained according to such process**

(71) Applicant: SILEX ITALIA S.p.A., 80132 Napoli (IT)
(72) Inventor: Sollo, Giovanni, 80132 Napoli (IT)
(74) Representative: Leone, Mario

(57) **Abstract**

A process for the manufacture of cooking vessels such as pots or pans and the like allows to obtain an apparent and long-lasting coined bottom, invisible inside the vessel, and comprising the steps of providing a flat member (1) in a metallic material apt to be formed into a vessel (15); depositing one or more outer coating layers (4) on a first surface (2) of said flat member (1); coining said first surface (2) at one coining region (6) thereof housed in a bottom region (14) of the vessel (15) to be formed, determining recesses (7) of predetermined depth; depositing one or more inner coating layers (10) on the second surface (3); and removing, at said bottom region (14), a thickness of said first surface (2) with said one or more inner coating layers (4), lower than said predetermined depth.

## Description

The present invention relates to a process for the manufacture of cooking vessels, in particular pots and/or pans and the like provided with a coined bottom, and also a vessel as above defined, obtained according to such process.

The processes and the related vessels of the above specified type are known in the art. They are carried out starting from a metallic flat member, e.g. made of aluminum, disc-shaped for the manufacture of substantially cylindrical pots that, after a possible surface treatment, is press-stamped into a vessel and coined at the outer surface of the bottom of the vessel formed thereby.

The press-stamping and the coining can be carried out in the same process by die forming or with a die casting process.

The function of the coining, carried out on the outer face of the vessel, i.e. on the bottom surface apt to be heated, is that of reinforcing the bottom itself in order to avoid the distortion or the bulging thereof, mostly due to the strains induced by the temperature variations.

Actually, with coining, that, being a simple permanent set does not entail a removal of the metallic material, regions of a metallic material having reduced thickness and increased density are formed, functioning as a stiffening bead for the bottom.

Successively, one or more coating layers are formed on both the outer and inner faces of the vessel.

Such layers can have a protective and a non-stick function and be e.g. PTFE-based, or have a colouring function, possibly for merely decorative purposes.

Obviously, on the coined outer surface, the coating layer /layers follow to the unevenness of the coining, filling up the recesses shaped at the coining stage.

Successively, such outer surface of the bottom can be superficially treated, removing, e.g. by turning, said coating layer/layers, uncovering the shiny metallic surface and leaving the coating layer in said recesses.

The object of the operation is that of highlighting said recesses, enabling the user to identify the vessel which is provided with them in comparison with the ones which are not provided.

In fact, the outer coating of the cooking vessels can be coloured or anyhow contrasts chromatically with the polished metallic bottom. Moreover, a pleasant aesthetical effect can derive from the combination of said chromatic effect with the shape and the layout of said recesses.

This kind of process allows to obtain coined bottoms having said chromatic effect, but it also entails some non negligible drawbacks.

In fact, the coining on the outer surface of the vessel thereby carried out, is a traumatic step for the metallic member, and besides modifying the shape thereof, also causes a substantial change of the inner surface of the bottom of the vessel.

The coating with a non-stick material produces an unevenness on the inner bottom of the vessel, that can look like a superficial fault, and that can entail a faulty adhesion of the inner coating layer that might therefore peel off during the vessel life.

Moreover, the adhesion of the outer coating layer at said recesses is also inadequate. Thus, the outer coating layer peels off little by little, thereby eliminating said aesthetical effect and making appear the vessel has being of lower quality.

The technical problem underlying the present invention is that of providing a process for the manufacture of cooking vessels enabling to overcome the drawbacks mentioned with reference to the prior art.

Such problem is solved by a process as above specified, characterised in that it comprises in a sequence the following steps:
* providing a flat member in a metallic material apt to be shaped into a vessel;
* depositing one or more outer coating layers on a first surface of said flat member surfaces;
* coining said flat member at said first surface on a coining region thereof, contained in a bottom region of the vessel to be shaped, thereby determining recesses of predetermined depth;
* depositing one or more inner coating layers on a second surface of said flat member surfaces; and
* removing a thickness of said first surface with said one or more inner coating layers substantially at said bottom region, lower than said predetermined depth.

The present invention further relates to a cooking vessel obtained according to the process as above defined, further comprising a die forming step of the flat member, carried out before or after the step of removing said thickness, and possible finishing steps.

The main advantage of the process for the manufacture according to the present invention lies in allowing the yield of an apparent and long-lasting coined bottom, invisible inside the vessel.

The present invention will be disclosed hereinafter according to a preferred embodiment thereof, given by way of example and not for limitative purposes, referring to the annexed drawings, wherein:
* figures 1 to 6 schematically shows various steps of the process for the manufacture according to the present invention; and
* figure 7 shows an example of a cooking vessel bottom obtained with the process illustrated in the preceding figures.

The process according to the present embodiment relates to the shaping of a pot or a pan, provided with a coined bottom and non-stick surfaces.

The process comprises an initial step, in the manufacture sequence, consisting in providing a flat member of a metallic material. In the present preferred embodiment, said flat member is a disc of predetermined thickness, apt to be transformed, through the subsequent steps, in a cylindrical cooking vessel having a circular section.

Obviously, starting from a member of a different shape, a vessel having a different shape can be obtained, e.g. one having an ellipsoidal section starting from an ellipsoid or a prismatic saucepan starting from a substantially quadrilateral member.

A metallic material particularly suitable to be used in the present process is aluminum.

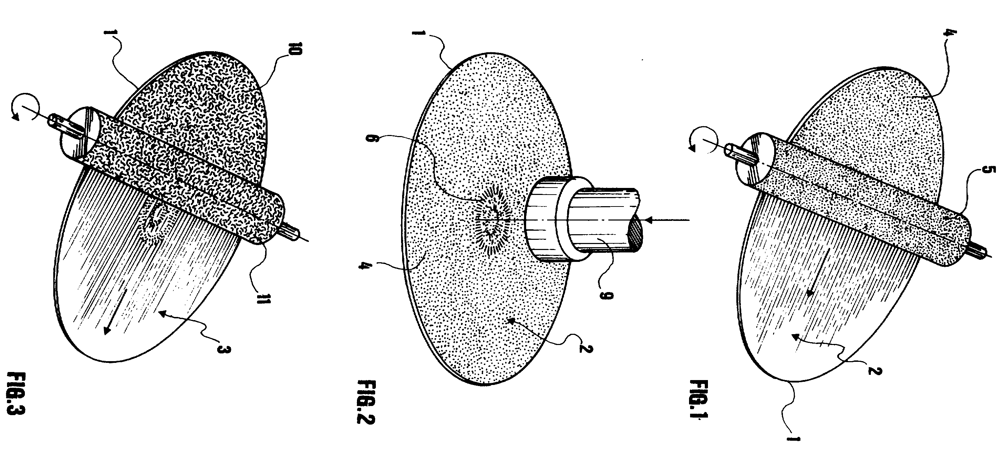

An aluminum disc, indicated with 1 in figures 1 to 4, undergoes a first phase superficial polishing treatment, with the removal of a possible oxidized layer.

Such surface treatment can be carried out with any superficial removal method such as pickling, grinding, pumicing, sandblasting and the like.

The preferred treatment is pickling, since, as it can be observed with a microscope, the aluminum surface finishing after the pickling has a plurality of pores comprising a surface opening having a narrowed section and a wide recess.

Such pore structure is particularly suitable to receive a coating layer, e.g. of polymeric type.

On the disc 1, a first surface 2 is evidenced, apt to form the outer surface of the vessel that is being manufactured, and a second surface 3, apt to form the inner surface of the vessel that is being manufactured.

The process according to the invention comprises a first step of depositing one or more outer coating layers 4 on said first surface 2.

The application of the outer coating layer 4 can be carried out according to one of the known methods: with a spray or a roller, or also through a silk-screen printing stencil passing a sleeker to form specific patterns on the first surface.

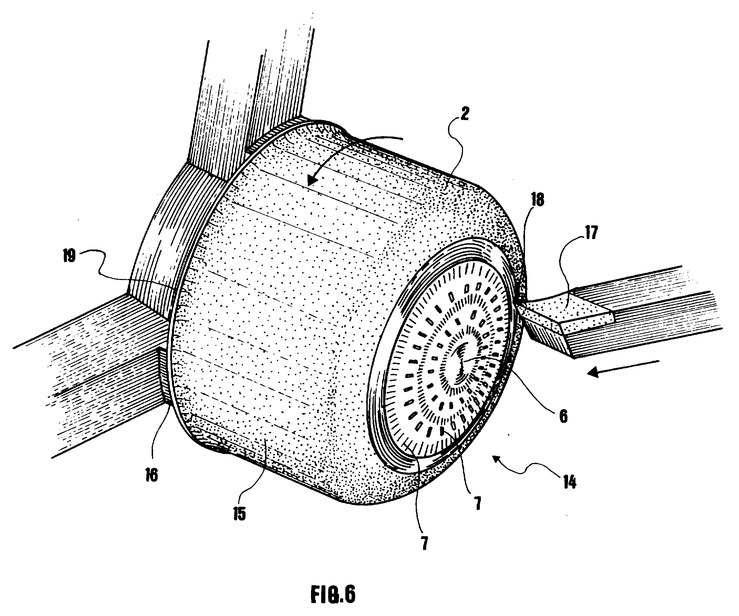

In a preferred embodiment of the present process, the application of the outer coating layer 4 takes place by means of a roller, indicated with 5 in figure 6, exerting a predetermined application pressure on the first surface.

Such application method allows the forming of one or more inner coating layers 4 having a predetermined and controlled thickness, with the penetration of the innermost layer in said pores of the aluminum.

In a preferred embodiment of the present process, the outer coating layer 4 consists of non-stick polymeric substances, possibly mixed with pigments conferring to said first surface a particular colouring.

The preferred polymeric substance is a PTFE, in a dry weight percentage comprised between 30 and 75%.

The total applied thickness of the outer layer or layers 4 is comprised in the range 5-50 µm, preferably in the range 20-40 µm.

The outer layer or layers 4 applied to the disc 1 are then fixed by heating, entailing a polymerization of the basic material and a stabilization of the pigment.

Preferably, such heating is carried out by baking, at a temperature conveniently higher than 380°C, in order to obtain an adequate polymerization, and lower than 480°C.

The preferred baking temperature range is 390-450°C.

In any case, the heating time is limited to a few minutes and is anyhow shorter than 10 minutes.

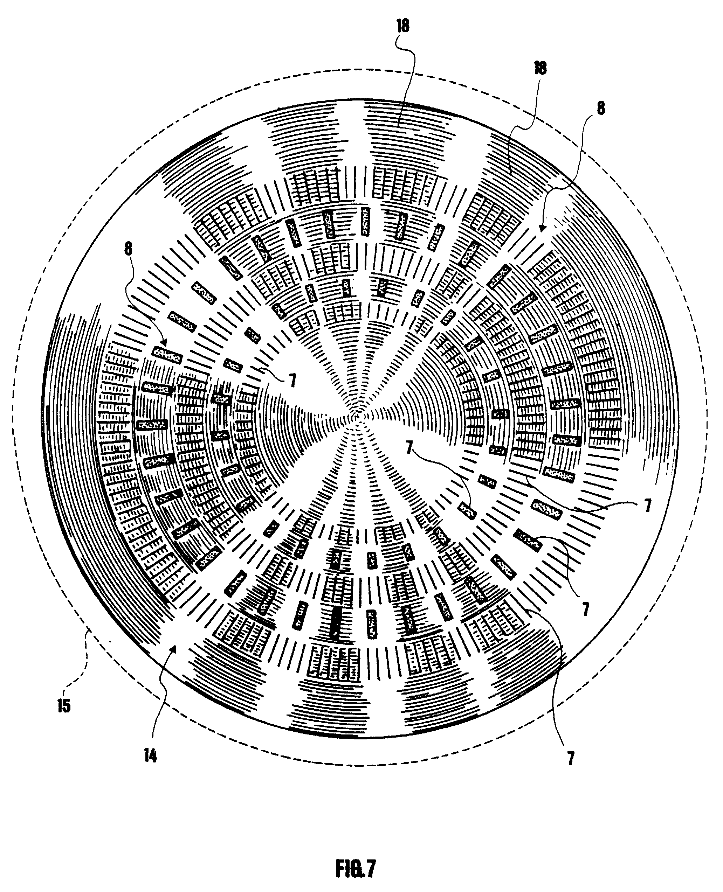

After the first step of depositing, the process according to the present embodiment comprises a step of coining said first surface 2 of the disc 1, at a coining region 6 thereof that is apt to be contained in the bottom region, of the vessel to be shaped as specified hereinafter determining a plurality of coined recesses 7 (figure 7) having even a different shape and of a predetermined minimal depth.

For coining region 6, the area where a coining punch schematically illustrated in figure 2 and identified with 9 acts on the target surface, whereon a force of around a 100 tons weight is applied is to be understood.

The impression of the punch 9 has a plurality of reliefs on its surface, not shown and producing the respective recesses 7, and acts on the disc 1 in support of a die matrix consisting of a completely smooth flat plate, not shown.

In the areas compressed by the reliefs of the punch 9, a localized reduction in the thickness of the disc 1 takes place, caused by the compression and by the related permanent set in the aluminum structure.

Such compressed areas, from a reinforcement of the entire coining region 6 at the recesses 7.

The recesses 7 can be placed in any configuration provided that it is apt to form a structural reinforcement for the bottom of the vessel that is being formed.

They can comprise, besides traditional shapes such as circles, annuli, radial and/or circumferential fissures and the like, even writings with coined letters.

Preferably said plurality of recesses 7 comprise a plurality of recesses elongated in a groove, placed on circumferential rows 8 (figure 7) concentric and with the recesses placed along radial lines.

Due to the coining, the outer global coating layer 4 is forcedly compressed on the first surface 2 of the disc 1.

To avoid a deformation and a loss of planarity of the disc 1, due to the internal stresses induced by the coining strain, the coining step can take place together with the action of a pressure bar member associated to the coining punch 9.

For instance, such pressure bar member can comprise an annular pressure plate contouring the periphery of the coining member. Such plate is connected to the coining punch 9 by elastic members, e.g. helical springs, that are apt to be compressed according to a run equal to the coining depth, thereby partially absorbing the pressure exerted thereon.

Advantageously, the action of the pressure bar member entails the exertion of a pressure lower than 50% of the pressure compressively exerted by the punch 9, preferably equal to about 20%.

Thus, the pressure of the pressure bar member is exerted on a region annularly contouring said coining region 6.

Advantageously, as a consequence of the previous pickling, the outer coating layer 4 is compressed and inserted also inside said narrowed section pores. This surface clinching effect can considerably improve the adhesion between the first surface 2 and the outer coating layer 4.

Furthermore, this effect is higher at the recesses 7.

The coining performed on an even surface plate and in particular with the action of the pressure bar member, is a limited trauma for the disc 1.

At the end of the above described step of coining the process according to the invention comprises a second step of deposition of one or more inner coating layers 10 onto said second surface 3.

The application of the inner layer 10 can be carried out according to one of the known methods: with a spray or a roller, or also through a silk-screen printing stencil passing a sleeker to form specific patterns on the second surface 3.

According to a preferred but not exclusive method of the present embodiment, the inner layer 10 consists of a plurality of sublayers deposited in sequence with a roller application, indicated with 11 in figure 3.

In this case as well, such application method allows the forming of one or more outer coating layers 10 having a predetermined and controlled thickness, with the penetration of the innermost layer in said aluminum pores.

In a preferred embodiment of the present process, the inner coating layer 10 consists of non-stick polymeric materials.

The preferred polymeric material is a PTFE, in a dry weight percentage generally comprised in the range 30-75%, preferably in the range 40-60%.

The total applied thickness of the inner layer or layers 10 is comprised in the range 5-50 µm, preferably in the range 20-40 µm.

In any case, the inner layer 10 thus applied is capable of hiding, i.e. to make invisible, the impressions possibly left on said second surface 3 in the previous step of coining.

Advantageously, it is possible to hide the coining on said second surface 3 with a reduced thickness of the outer coating layer 10.

The inner layer or layers 10 thus applied to the disc 1 are then fixed by heating, entailing a polymerization of the basic material.

When a smooth inner layer 10 is needed, such heating is performed by baking, at a temperature conveniently higher than 380°C, to obtain a suitable polymerization, and lower than 480°C.

The preferred baking temperature interval range is 420-450°C.

In any case, the heating time is not longer than a few minutes and anyhow shorter than 10 minutes.

When instead a bottom surface provided with surface unevenness is desirable, such to divert the course and the cutting action of tools unwarily used onto said bottom surface, as cutlery, knives, beaters and the like, to adhere a second assembly of uneven inner layers to said inner layer 10, the latter has to be heated at a lower temperature, advantageously comprised in the 380-420°C range.

Then, said second assembly of uneven inner layers can be deposited on the fixed outer layer 10, e.g. by silk-screen stencil deposition that gives to said assembly a peculiar configuration, for instance in checkers, honeycomb or further comprising writings and/or ornamental patterns.

Such assembly can extend over a portion of the second surface 3 of the disc 1, preferably at the inner surface of the bottom of the vessel that is being formed.

The thickness of said assembly is comprised in a range from 5 to 50 µm, so as to create unevennesses of equal height. Preferably, the thickness of said assembly is comprised in a range from 20 to 45 µm.

Then, it is necessary for such assembly to be heated at a temperature higher than the heating temperature of the inner layer 10. Such difference is of at least 10°C, preferably of about 20°C.

The heating temperature of the assembly of the uneven inner layers is anyhow comprised in a range from 390°C to 450°C, preferably in a range from 420 to 440°C.

Even in the case of said outer layer 10 and of said assembly, which are not shown, the baking time is anyhow limited to a few minutes, preferably shorter than 10 minutes.

Following said second step of depositing, the process according to the present embodiment comprises a forming step of shaping the disc 1.

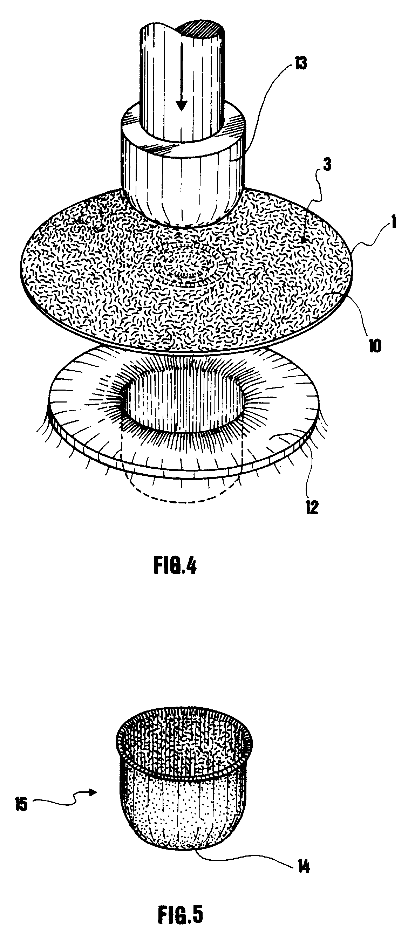

Such shaping takes place, in its most general aspect, at the press and in particular takes place by a drawing of substantially normal type, operated using a matrix 12 and a drawing punch 13 that cooperate with the aid of a pressure bar , not shown (figure 4).

Obviously, the drawing punch 13 operates on the second surface 3 of the disc 1, while the matrix 12 is put in contact with the first surface 2.

Due to the optimal adhesion between the surfaces 2, 3 of the disc 1 and the respective coating layers 4, 10 and to the non-stick properties of both said surfaces 2, 3, no drawing material is needed among disc 1, drawing punch 13 and matrix 12.

The drawing is advantageously of a simple type, implying only one pressing, regardless of the shape of the vessel to be produced.

In fact, with the above described process any kind of pot or pan can be manufactured: pans, saucepans and skillets having more or less high lateral walls, cylindrical or ellipsoidal sectioned pots, cake-tins, cup-formed or inverted frustocone pots or saucepans, provided they have a bottom region 14 substantially plane or anyhow convex to avoid bulgings deriving from thermal strain.

Said bottom region 14 houses said coining region 6.

Once the press forming step is over, a semimanufactured vessel 15 (figure 5) is obtained, apt to be finished to manufacture a finished vessel.

The process according to the present embodiment comprises a step of removing, at said coining region 6, of a thickness of said first surface 2, outside the vessel 15, with said one or more outer coating layers 4, lower than said predetermined depth on the bottom region 14.

Said thickness is lower than 100 µm and can be removed with one of the known metal machining methods.

In particular, in the example herein described, with the bottom region 14 already press-formed, a turning (figure 6) of the bottom region 14 can be performed placing the vessel 15 in rotation on a specific mandrel 16 and moving the cutting tool 17 radially from the periphery towards the center of the bottom region, determining a cutting plane.

Thus, removing a thickness as above defined, said outer coating layer 4 is entirely removed at the bottom region 14 and, therefore, at the coining region 6 as well, but not at the coined recesses 7, where the coating layer 4 remains standing out against the remaining bottom region 14 polished with the turning.

Besides the turning as above described, other removal methods such as milling or grinding can be adopted.

In the present case, the turning makes it possible to form on a concentrical circle microgrooving 18 the bottom region 14 providing a higher surface resistance to strains deriving from heat, knocks, scratches and the like.

The process herein described can be subject to the variant of changing the order of the press forming steps and of removal of a thickness off the bottom region 14.

In such a case, the most convenient removal method is the milling, with which it is however possible to obtain microgrooves or other similar supporting surface unevenness.

Once the semimanufactured vessel 15 has undergone the removal of said thickness, the vessel itself can at last be finished with the trimming of the rim 19 of the vessel 15, possibly in a step concomitant with to the turning, the addition of handles, lids, and other possible accessoires.

After such finishing step, with the above described process, a cooking vessel provided with a coined bottom is obtained, particularly resistant and with the recesses provided with a persistent colour. Inside the vessel, the impression of said coining is substantially invisible.

Moreover, such vessel has remarkably non-stick properties both inside and outside, with long lasting non-stick layers.

Moreover, in the embodiment provided with an uneven inner bottom, an improved effectiveness against the damages deriving from a wrong use of utensils is also provided.

To the above described process for the manufacture of cooking vessels with a coined bottom, a man skilled in the art, in order to satisfy further and contingent needs, may introduce several further modifications and variants all of them comprised within the protection scope of the present invention, as defined in the annexed claims.

## Claims

1. A process for the manufacture of cooking vessels, in particular pots and/or pans and the like, provided with a coined bottom, characterised in that it comprises in sequence the following steps:
* providing a flat member (1) in a metallic material apt to be shaped into a vessel (15);
* depositing one or more outer coating layers (4) on a first surface (2) of the surfaces (2, 3) of said flat member (1);
* coining said flat member at said first surface (2) on a coining region (6) thereof housed in a bottom region (14) of the vessel to be shaped (15), thereby determining recesses (7) of predetermined depth;
* depositing one or more inner coating layers (10) on a second surface (3) of the surfaces (2, 3) of said flat member (1); and
* removing substantially at said bottom region (14), a thickness of said first surface (2) with said one or more outer coating layers (4), lower than said predetermined depth.

2. The process according to claim 1, wherein said flat member is a disc (1).

3. The process according to claim 1, wherein said metallic material is aluminum.

4. The process according to claim 1, wherein said flat member (1), prior to the steps of deposition of the coating layers (4, 10), undergoes a superficial polishing treatment step, with the removal of a possible oxidized layer.

5. The process according to claims 3 and 4, wherein said surface treatment step is pickling.

6. The process according to claim 3, wherein the deposition of the outer coating layer (4) takes place with a roller (5), exerting a predetermined application pressure on the first surface (2).

7. The process according to claim 1, wherein the outer coating layer (4) consists of non-stick polymeric substances.

8. The process according to claim 7, wherein said non-stick polymeric substances are mixed with pigments.

9. The process according to claim 7, wherein said polymeric substances comprise PTFE, in a dry weight percentage comprised in a range from 30 to 75%.

10. The process according to claim 1, wherein the total applied thickness of the outer coating layer (4) is comprised in a range from 5 to 50 µm, preferably in a range from 15 to 40 µm.

11. The process according to claim 1, wherein the outer coating layer (4) is fixed by heating, preferably carried out by baking, at a temperature higher than 380°C and lower than 480°C, preferably in a range from 390 to 450°C, for a heating time lower than 10 minutes.

12. The process according to claim 1, wherein said recesses (7) comprise a plurality of recesses elongated in a groove, placed on circumferential rows 8, concentric and with the recesses placed along radial lines.

13. The process according to claim 1, wherein the coining takes place together with the action of a blank holder member entailing the exertion of a pressure lower than 50% of the pressure exerted in the coining region (6), on a contour region of said coining region (6).

14. The process according to claim 3, wherein the inner layer (10) consists of a plurality of sublayers deposited in sequence with a roller application, consisting of non-stick polymeric substances, and is fixed by heating carried out through baking, at a temperature preferably comprised in a range from 380 to 420°C; and whereon a second assembly of uneven inner layers having thicknesses comprised in a range from 15 to 45 µm is deposited, fixed through heating at a temperature that is at least 10°C higher than the heating temperature of the inner layer (10).

15. The process according to claim 1, wherein said removal step takes place by turning, milling, grinding or the like.

16. The process according to claim 15, a microgroove is formed on the bottom region (14) wherein in the removal step.

17. The process according to any one of the preceding claims, comprising a step of shaping of the flat member (1) in a vessel (15) that takes place at the press, defining said bottom region (14).

18. The process according to claim 15, wherein said forming step takes place by drawing.

19. The process according to claim 17 or 18, wherein the vessel (15) is finished, manufacturing a cooking vessel.

20. The cooking vessel manufactured by a process according to claim 19.
